(19) Europäisches Patentamt
European Patent Office
Office européen des brevets

(11) **EP 2 595 116 A1**

(12) **EUROPEAN PATENT APPLICATION**
published in accordance with Art. 153(4) EPC

(43) Date of publication:
**22.05.2013 Bulletin 2013/21**

(51) Int Cl.:
***G06T 13/00*** *(2011.01)*    ***G06T 7/00*** *(2006.01)*

(21) Application number: **10851028.0**

(86) International application number:
**PCT/ES2010/070308**

(22) Date of filing: **07.05.2010**

(87) International publication number:
**WO 2011/138472 (10.11.2011 Gazette 2011/45)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Telefónica, S.A.**
**28013 Madrid (ES)**

(72) Inventors:
• **MARIMÓN SANJUAN, David**
**E-08021 Barcelona (ES)**

• **GRASA GRAS, Xavier**
**E-08021 Barcelona (ES)**

(74) Representative: **Carpintero Lopez, Francisco et al**
**Herrero & Asociados, S.L.**
**Alcalá 35**
**28014 Madrid (ES)**

(54) **METHOD FOR GENERATING DEPTH MAPS FOR CONVERTING MOVING 2D IMAGES TO 3D**

(57)    A moving 2D image is made up of a series of still images referred to as current frame (K), previous frame (K-1) and so on. The method generates depth maps that allow converting 2D images to 3D. To do so, the method comprises a first step in which a pyramid of scaled versions of the current frame and the previous frame are generated, a second step in which the optical flow between the current and previous pyramids is calculated, a third step in which the image-point-oriented depth map is calculated, a fourth step in which image segments in the current frame are generated, a fifth step in which the segment-oriented depth map focused on said segments is calculated, obtaining a segment-oriented depth map, and a sixth step in which the segment-oriented maps relating to the current and previous frames are integrated, obtaining the final map for the current frame.

FIG. 1

**Description**

Object of the Invention

As expressed in the title of this specification, the present invention relates to a method for generating depth maps for converting moving 2D images to 3D the essential purpose of which is to convert a 2D video to a 3D video following the MPEG-C part 3 standard (MPEG= Moving Picture Expert Group). User experience with videos coded with this standard using autostereoscopic displays shows the importance of respecting the edges of the objects for better visual experience. In this sense, the invention is particularly designed to respect the edges, proposing a new depth assignment model consistent with image segments that are established in each still image of the corresponding animation; paying special attention to the segmentation algorithm used in the fourth step of the proposed method to respect the edges of the objects.

The depth maps that are generated with the method of the invention can be used both for directly viewing 2D images in a 3D system and for transmitting video files incorporating information relating to its three-dimensional viewing.

Background of the Invention

The launch of 3D viewing systems on the market and the growth of the visual content generation have sparked the need for a standard method for exchanging 3D visual information. In response, MPEG has recently launched the ISO/IEC 23002-3 specification, also known as MPEG-C part 3 [1]. This specification focuses on coding 3D contents formatted with what is called "2D video plus depth". Such format consists of the side-by-side composition of each video frame with a left half which is the 2D visual content and a right half which is the depth map.

The main advantages of this coding format are:

- Independence from capture technology.
- Independence from display technology.
- Backward compatibility with 2D.
- Good compression efficiency (low overload).

The depth is coded with a value of N bits. The depth map represents the value of the depth associated with each image point or pixel of the 2D visual content. With the depth map available, it is possible to generate multiple views of the scene depending on the spectator's position.

The depth maps can be generated directly with stereo cameras or using Time-of-Flight cameras based on infrared light. Another alternative is to convert the existing 2D video content to "2D video plus depth".

There are several research techniques related to estimating the 3D structure using a video stream or a pair of images of the same scene. These can be divided into the following categories. Particular examples of each of the categories can be found in [2]:

- Feature-based: these algorithms establish correspondences between some selected features extracted from the images, such as the pixels or image points of the edges, line segments or curves. Its main advantage is obtaining precise information and handling reasonably small amounts of data, thereby gaining in time and space complexity.
- Area-based: in these approaches, dense depth maps are provided by correlating the gray-levels of regions of the image in the views being considered, assuming they bear some similarity.
- Phase-based: another class of methods is based on Fourier phase information, which can be considered a gradient-based class of an area method, with the time derivative approximated by the difference between the left and right images of the Fourier phase. Hierarchical methods are also used at this point to avoid getting trapped in some local minima.
- Energy-based: a final class of approach consists of solving the correspondence problem in a regularization and minimization formulation.

This field of research has mainly been concentrated on calculating a precise optical flow between pairs of images. Hereinafter, some examples focused on the generation of dense depth maps or disparity maps using a single camera, not a stereo pair, are herein highlighted. Ernst *et al.* [3] have filed a patent on the calculation of depth maps. Its method starts by calculating a segment tree (hierarchical segmentation). The tree is analyzed from top to bottom, starting from the root node. A set of candidate motion vectors is generated for each segment. Each motion vector is assigned a penalization according to other motion vectors in neighboring blocks. The depth of each of the segments is assigned according to the motion vector that is selected. Ideses *et al.* [4] propose mapping the optical flow calculated with the motion vectors of an MPEG encoder working in time real. The optical flow is mapped directly as an image-point-oriented depth map. The drawback of this method is that the depth is not consistent with the objects. Actually, only the pixels in the edges of the object where the real depth suddenly changes have a significant optical flow and, therefore, depth. Li *et al.* [5] present another method for obtaining a dense depth map using structure from motion. Their method is divided into two steps. Firstly, the projective and Euclidean reconstruction is calculated from feature points with tracking. Secondly, it is assumed that the scene is formed by flat surfaces facing pieces described by triangles joining three 3D points. The main drawbacks in this case are due to regions with little texture (i.e., with a small number of feature points) and in the transition between the foreground and the background imposed by the assumption of flatness.

Examples of technology estimating a 3D structure or depth maps directly exist as industrial applications or machines. Boujou software from 2d3 [6] stands out, among others. Boujou is an Emmy award-winning industrial solution for camera and object tracking. This solution is able to generate 3D mesh of a surface by following the motion of the camera. This method is similar to [5]. Another product available for editing films is the WOWvx BlueBox from Philips [7]. This tool provides the user the possibility of editing the depth map of a key frame that determines the beginning of a shot in the video sequence. This editing tool is completely manual. Once the depth map corresponding to the key frame is ready, the tool is able to follow objects in the sequence during the shot (i.e., until the next key frame). This tracking allows generating depth maps for each frame in the shot. Some manual corrections are necessary in the event that the tracking system fails. This process is tedious because the generation of the depth map and the correction are manual.

With respect to the problems and drawbacks occurring with solutions existing in the state of the art, the following must be indicated:

> There are several limitations in the aforementioned methods and technology.

In the case of feature-based techniques, their main drawback is the scarcity of the recovered depth information because it only produces information about the depth in the features but not about the intermediate space.

Area-based and phase-based methods are adapted for relatively textured areas; however, they generally assume that the observed scene is locally parallel to the front, which causes problems for slanted surfaces and particularly close to the occluding contours of the objects. Finally, the matching process does not take into account the information about the edges, which is actually very important information that must be used to obtain reliable and precise dense maps.

The case of energy-based methods and of methods estimating the underlying 3D structure of the scene is that the camera needs to be calibrated (at least slightly). In many cases, they also have an epipolar geometry also having several limitations when the motion of the camera is very limited within a specific shot or when the camera rotates about its perpendicular axis.

Literature

> [1] A. Bourge, J. Gobert, F. Bruls. MPEG-C Part 3: Enabling the Introduction of Video Plus Depth Contents, Proc. of the IEEE Workshop on Content generation and coding for 3D-television, 2006.
> [2] L. Alvarez, R. Deriche, J. Sánchez, J. Weickert. Dense Disparity Map Estimation Respecting Image Discontinuities: A PDE and Scale-Space Based Approach, Tech. Report, INRIA Sophia-Antipolis, France, 2000.
> [3] Ernst, F., Wilinski, P., Van Overveld, C. (2006). *Method of and units for motion or depth estimation and image processing apparatus provided with such motion estimation unit.* U.S. Patent No. 7,039,110 B2. Washington, DC: U.S. Patent and Trademark Office.
> [4] I. Ideses, L.P. Yaroslavsky, B. Fishbain, Real-time 2D to 3D video conversion, Journal of Real-time Image Processing, 2:3-9, Springer, 2007.
> [5] Li, P, Farin, D., Klein Gunnewiek, R., and de With, P. On Creating Depth Maps from Monoscopic Video using Structure from Motion. Proc. of the 27th Symp. on Information Theory in the BENELUX (WIC2006), vol.1, June 8-9, 2006, Noordwijk, the Netherlands
> [6] Boujou from 2d3.http://www.2d3.com/product/?v=1
> [7] WOWvx BlueBox from Philips. http//www.business-sites.philips.com/3dsolutions/products/wowvxhlueboxlindex.page
> [8] Parallax. http://en.wikipedia.org/wiki/Parallax
> [9] Berthold K.P. Horn and Brian G. Schunck. Determining Optical Flow. Artificial Intelligence, 17, pp. 185-203, 1981

Description of the Invention

To achieve the objectives and avoid the drawbacks indicated in preceding sections, the invention consists of a method for generating depth maps for converting moving 2D images to 3D, where the moving 2D image is made up of a series of still images sequenced with a frequency to give a feeling of motion, where the still image in a specific moment is referred to as current frame, the still image prior to the current frame is referred to as previous frame and so on; where the generated depth maps are used for an action selected from directly viewing 2D images in a 3D system, transmitting video files incorporating information relating to their three-dimensional viewing and a combination of both.

In a novel manner, to perform the aforementioned generation of depth maps according to the invention, the parallax is mapped at a specific depth, determining the optical flow to establish the changes in coordinates experienced by at least one image point ("image point" and "pixel" are indistinctly used along the description) with the same value of at least one parameter selected from luminance, color frequency, color saturation and any combination thereof, when going from one still image to the next, for which the method of the invention comprises the following six steps:

- a first step in which a pyramid of scaled versions of the current frame and a pyramid of scaled versions of the previous frame are generated; where the pyramid of scaled versions of the current frame comprises hierarchical versions of the current frame and the pyramid of scaled versions of the previous frame comprises hierarchical versions of the previous frame; where the hierarchical versions are carried out by means of controlled variations of at least one of the parameters of the corresponding still image;

- a second step in which the optical flow between the pyramid of scaled versions of the current frame and the pyramid of scaled versions of the previous frame is calculated; where said calculation of the optical flow is carried out by means of a standard algorithm for matching and comparing blocks of pixels or image points between two images; obtaining partial depth maps with different degrees of resolution;

- a third step in which the image-point-oriented depth map is calculated, which is carried out by means of adding said partial depth maps together after they are resized and weightings are assigned to give a degree of relevance to each of said partial maps; where the weightings assigned to each depth map are based on the value of its degree of resolution;

- a fourth step in which segments of the current frame are generated, in which said current frame is split into segments depending on at least one relative feature relating to the image of the various areas of the current frame, said relative feature being color consistency;

- a fifth step in which the segment-oriented depth map of the current frame is calculated, in which a single depth value is assigned to each segment established in the fourth step, said depth value being the mean value of the pixels comprised in each segment of the image-point-oriented depth map calculated in the third step; obtaining a segment-oriented depth map of the current frame; and

- a sixth step in which depth segment-oriented maps relating to the current frame and to the previous frame are integrated, the segment-oriented depth map of the previous frame being the result of applying steps 1 to 5 of the method to the previous frame and to a frame prior to the previous frame; said integration consisting of a weighted sum of the segment-oriented depth map of the current frame with the segment-oriented depth map of the previous frame; obtaining a final depth map for the current frame.

According to the preferred embodiment of the invention, the pyramid of scaled versions of an image is generated in the first step by downscaling the starting frame several fold in the version of gray-level intensities of the image, such that in each level of the pyramid, the scaled versions have half the width and half the height in pixels with respect to the previous level, and such that every time an image is scaled, it is first filtered with a fixed-size Gaussian filter, and it is then downsampled by rejecting the even rows and columns, performing this filtering to improve stability and generating the pyramid of scaled versions on the previous video frame and current video frame; however, to accelerate the process, the pyramid corresponding to the current frame is saved so that when the first step of the method is applied to a frame following the current frame, the pyramid corresponding to the frame which is prior to said following frame is already available.

Furthermore, according to the preferred embodiment of the invention, the optical flow is calculated in the second step by matching the blocks of pixels between two images, said blocks having a fixed size and such that a block is formed by first intensity values of the pixels of a first image corresponding to a level of the pyramid generated in the first step for one of the frames, establishing the best match by means of the block of second intensity values of the pixels of a second image corresponding to a level of the pyramid generated in the first step for the other one of the frames and such that it has second intensity values closer to the aforementioned first values; the optical flow being the distance on the X and Y axes in pixels from the coordinates of the block in the first image to the best matched coordinates in the second image, such that two maps result, one for the X axis and the other for the Y axis.

According to the preferred embodiment of the invention, all the partial depth maps are resized in the third step to the dimension of the starting frame in the method, and all the partial depth maps are added together to generate the image-point-oriented depth map, assigning a different weight to each of them, and such that the lower the degree of resolution of a partial depth map, the greater the weight assigned to it.

On the other hand, and also for the preferred embodiment of the invention, the integration of the depth maps in the sixth step is carried out by means of the following expression:

$$D=\alpha*D_s(t-1) + (1-\alpha)*D_s(t);$$

where $D_s(t)$ indicates the segment-oriented depth map relating to a current frame; $D_s(t-1)$ indicates the segment-oriented depth map relating to a previous frame; D is the resulting integrated map and $\alpha$ is an integration ratio.

In the preferred embodiment of the invention, the method thereof is optimized with the values indicated below:

- Original images with a size of 960 x 540 pixels.
- Five levels in the pyramids of scaled versions of the previous frame and current frame of the first step.
- A block size of 20 x 20 pixels for the calculation of the optical flow of the second step.
- An integration ratio $\alpha$ = 0.8 in the sixth step.

On the other hand, for other embodiments of the invention, the method thereof can have some variations such as those indicated below.

In one of those variations, the optical flow calculated for the input of the third step comprises the calculation of the optical flow between the previous frame and the current frame by means of blocks of pixels of a variable size; calculating this optical flow n times for one and the same still image or frame filtered with a Gaussian filter of a different size each of those n times; n being a natural number coinciding with the number of levels of each of the pyramids of the first step of the method; said variable size of the blocks of pixels being directly proportional to the variance of the Gaussian filter and inversely proportional to the value of n.

In another one of the mentioned variations of the method of the invention, the integration of the depth maps of the sixth step is carried out by means of the following expression:

$$D = \alpha * D'_s(t-1) + (1-\alpha) * D_s(t);$$

where $D_s(t)$ indicates the segment-oriented depth map relating to a current frame; D is the resulting integrated map; $\alpha$ is an integration ratio; and $D'_s(t-1)$ is a translated depth map that is obtained by means of the point-by-point image translation of the segment-oriented depth map relating to a previous frame $D_s(t-1)$ to a complementary depth map $D'_s$ which is a segment-oriented depth map obtained from the optical flows obtained in the second step, where only the partial depth maps having a higher degree of resolution and relating to a current frame are considered.

Concerning the advantages of the invention with respect to the state of the art actual, it should be indicated that the method of the invention is particularly designed to respect the edges of the image segments that are established, proposing a new depth assignment model consistent with those segments, paying special attention to the segmentation algorithm used in the fourth step for respecting the mentioned edges of the image segments or objects thereof. Compared to reference [5] in the background of the invention section herein, the problem with the areas of transition between the foreground and the background, or simply between the objects, is solved by means of the proposed segment-oriented treatment of the depth maps established in the fifth step of the method of the invention. Furthermore, another issue arising when a 2D video is converted to 3D is the heterogeneous content that has to be converted. Therefore, even though there is no knowledge *a priori* about whether the scene before the camera is still or if some objects are moving, to treat moving objects in the invention, it is assumed that the objects that are moving are closer to the camera if they are larger, so the invention applies a weighting factor or a weighting assignment, as described in the third step of the method, introducing that weighting factor for the contribution of each of the levels in the pyramid when calculating the image-point-oriented depth map; therefore larger objects appear as complete blocks in the lowest resolutions. Therefore according to the method of the invention, the lowest resolutions have a higher contribution (a higher weight) for the depth map. Flexibility that enables treating both still scenes, where the image segments and their sub-segments have consistent motions, and dynamic scenes, where the objects or image segments describe different motions, is thereby provided. A limitation of the segmentation-based tree method belonging to the state of the art according to reference [3] in the background of the invention section herein is thereby overcome, being able to prevent drawbacks relating to excessive rigidity in the corresponding scene.

To help better understand this specification and forming an integral part thereof, a set of drawings are attached below in which the object of the invention has been depicted with an illustrative and non-limiting character.

Brief Description of the Drawings

Figure 1 is a functional block diagram of a method for generating depth maps for converting moving 2D images to 3D, performed according to the present invention and showing part of its component steps, specific the first to the fifth steps of said method.

Figure 2 is a functional block diagram depicting the sixth and final step of the method referred to in the preceding Figure 1, furthermore relating it with the prior steps of the aforementioned method.

Description of an Embodiment of the Invention

A description of an example of the invention is provided below in which the references of the drawings are referred to.

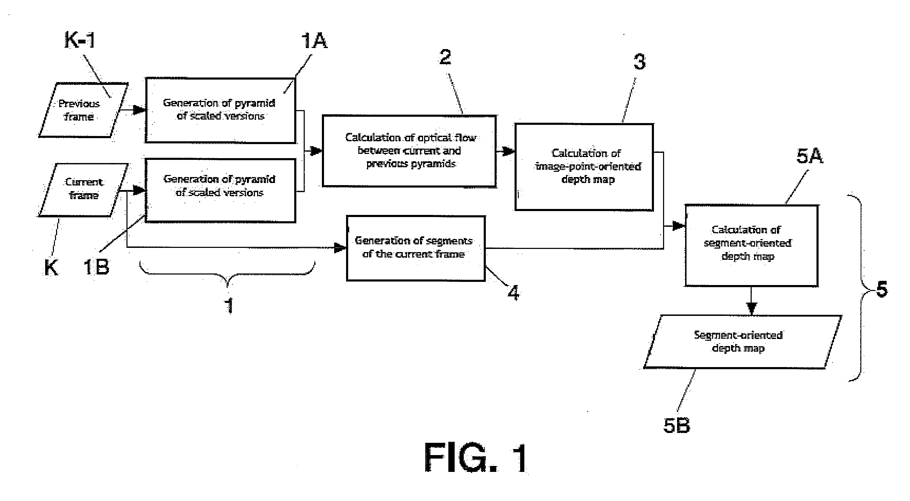

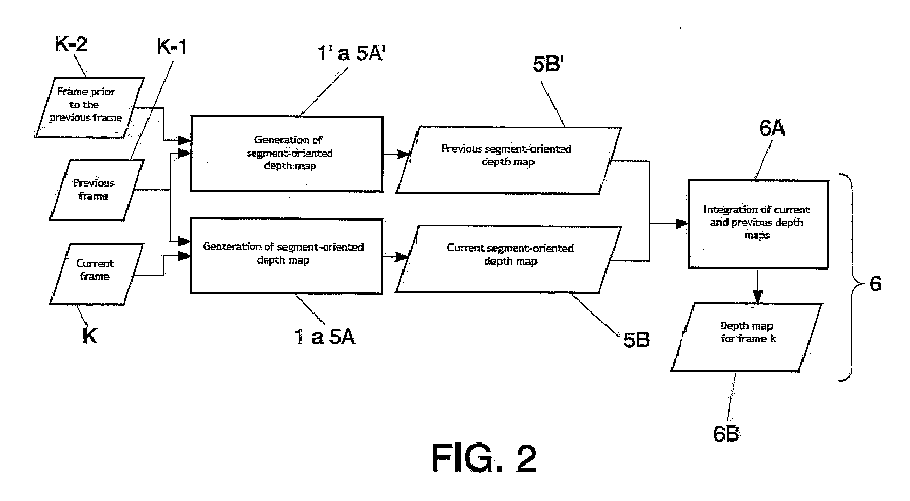

The method for generating depth maps for converting moving 2D images to 3D according to this example of the invention is illustrated in Figures 1 and 2, a list with the meaning of the references first being provided:

1: First step of the method; generation of the pyramid of scaled versions.
2: Second step of the method; calculation of the optical flow between the current and previous pyramids.
3: Third step of the method; calculation of the image-point-oriented depth map.
4: Fourth step of the method; generation of the segments of the current frame.
5: Fifth step of the method; calculation of the image segment-oriented depth map.
6: Sixth step of the method; integration of the current and previous depth maps.

1A: First step of the method applied to a previous frame.

1B: First step of the method applied to a current frame.

5A: Calculation of the segment-oriented depth map in the fifth step of the method.

5B: Depth map obtained in the fifth step of the method, referring to a current frame.

1 to 5A: First to fifth steps of the method for a current frame.

1' to 5A': First to fifth steps of the method referring to a previous frame.

5B': Segment-oriented depth map which is obtained in the first to the fifth steps of the method, referring to a previous frame.

6A: Process in which maps of the sixth step of the method are integrated.

6B: Final depth map obtained in the sixth step of the method for a current frame.

K: Current frame.

K-1: Previous frame.

K-2: Frame prior to the previous frame.

The invention described by this patent is based on the concept of parallax. Parallax is an apparent displacement of an object viewed along two different lines of sight. A change in the position of an observer of a scene produces different levels of parallax. More precisely, the objects that are closest to the observer have larger parallaxes and vice versa. In the invention presented herein, the parallax is mapped at a depth. A possible approach for calculating the parallax of a moving observer is to determine the optical flow. The optical flow consists of calculating the motion vectors between two images (which in the present case are two consecutive video frames). The motion vectors determine the change in the coordinates of a pixel, or a set of pixels, having the same content in both images. Content is understood as luminance, color and any other information identifying an pixel, or a set of pixels.

The present invention proposes a method for calculating the optical flow between the current frame and previous frame in a pyramidal manner. The depth map is obtained by adding the result of processing the optical flow in different scales together. Once the image-point-oriented depth map is available, the method generates a depth map with respect to image segments. Each segment in the image is assigned a different depth value. This depth value is the mean values of the image-point-oriented depth map. Additionally, the depth map is integrated over time to produce more consistent results.

The generation of the depth map of a video frame or signal corresponding to a video frame or still image according to the present example of the invention can be split into the aforementioned steps 1 to 6 which are explained in greater detail below:

1. Generation of the pyramid of scaled versions.

The pyramid of scaled versions of an image is generated by downscaling the original image several fold. This process is performed in the version of gray-level intensities of the image. In each level of the pyramid, the scaled versions have half the size (half the width and half the height in pixels) of the previous level. Every time an image is scaled, it is first filtered with a fixed-size Gaussian filter (5x5 pixels) and it is then downsampled by rejecting the even rows and columns. This pre-filtering is done to generate more stable results. The generation of the pyramid of scaled versions is performed on the previous video frame and current video frame. To accelerate the process, the pyramid corresponding to the current frame is saved for the following frame.

2. Calculation of the optical flow between the current pyramid and the previous pyramid.

The optical flow is calculated by matching the blocks of pixels between two images. A block is formed by the intensity values of the pixels of an image. The best match is the block of the second image which most resembles the block of the first image. The optical flow is the distance on the X and Y axes in pixels from the coordinates of the block (i,j) in the first image to the best matched coordinates in the second image. Two maps result, one for the X axis $O_X(i,j)$ and the other for the Y axis $O_Y(i,j)$. The algorithm used for calculating the optical flow is described in reference [9] in the "Background of the Invention" section herein.

An image of the previous pyramid is referred to as $I_k$, where $k$ is the level of the pyramid from $k=0$ (the original image) to $N-1$, $N$ being the number of levels in the pyramid. The same is applied to any image in the current pyramid, referred to as $J_k$. The process is iterative and starts with the lowest resolution ($k=N-1$). In each of the iterations the optical flow ($O_X(i,j)$ and $O_Y(i,j)$) calculated in the previous level is used as previous information about the most likely match. More precisely, the matching of certain block $A$ in $I_k$ determines an overall optical flow in all the sub-blocks in $A$ in the following level $I_{k-1}$. This is the optical flow used as the initial estimate when the following level of the pyramid is processed, i.e., matching $I_{k-1}$ with $J_{k-1}$. The calculation ends with the last level of the pyramid ($k=0$).

For each resolution level, a partial depth map $D_{OF,k}$ is obtained taking the optical flow rule for each of the pixels. Expressed mathematically, it is:

$$D_{OF,k}(i,j) = \left|\left| O_{X,k}(i,j)^2 + O_{Y,k}(i,j)^2 \right|\right|^{1/2}$$

3. Calculation of the image-point-oriented depth map $D_p$.

All the depth maps $D_{OF,k}$ ($k=0,..,N-1$) are resized to the dimension of the original video frame. To generate the image-point-oriented depth map, all the partial depth maps are added together. In this addition, a different weight is given to each of the maps. More specifically, higher relevance (greater weight) is given the depth maps with the lowest resolutions. The result is a scale-space depth map $D_p$.

4. Generation of the segments of the current frame

The generation of the depth map must take great care with the edges. If no effort is make to consider the edges, an annoying effect could be generated when the 3D video + depth is displayed. In fact, a halo effect around the objects could be perceived.

In the segmentation process, special attention is paid to the edges of the ends. The current frame is segmented into consistent color regions. The boundary of the segments does not exceed an edge even if the color of both segments is similar. The segments are identified as $R_i$, where $i$ is the index from $i=1$ to $M$, where $M$ is the number of segments in the image.

5. Calculation of the segment-oriented depth map $D_s$.

The objective of this calculation is to assign a single depth value to each of the segments $R_i$ of the image. The mean value of the pixels of the scale-space depth map $(D_p)$ is calculated for each of the segments $R_i$, resulting in $d_i$. The result of this process is a set of $M$ depth values, one for each of the segments. The depth map $D_s$ is formed with the segments extracted from the image of the current frame. All the pixels in each segment $R_i$ are assigned the corresponding mean depth value $d_i$.

6. Integration of the current and previous depth maps.

To generate depth maps which are consistent over time, the results of the previous depth maps are integrated. For each of the frames, the integrated depth map is a weighted sum of the current depth map $D_s$ and the previous depth map $D_s$. The formula used is $D = \alpha * D_s (t-1) + (1-\alpha) * D_s(t)$, where t indicates the current frame.

The process described in steps 1 to 6 can be carried out with some variations. The possible variations and the best mode for the process described above are described below.

The process described above has been shown to produce the best results with:

- Original images with a size of 960 x 540 pixels.
- Five levels in the pyramid (step 1).
- A block size of 20 x 20 pixels for the calculation of the optical flow (step 2).
- An integration ratio $\alpha=0.8$ (step 6).

Steps 1 and 2 can be interchanged with the following method. Instead of using a block having a fixed size in step 2, it is possible to calculate the optical flow with the same image several times (as many levels as there would be in the pyramid), but with a block that changes in size. Therefore, the method would use a block having a large size in the lowest level ($k=N-1$), whereas the block would have a smaller size for the highest level. The optical flow would be calculated for each of the levels with the original image filtered with a Gaussian filter of a different size. The size of the block is directly proportional to the variance of the Gaussian filter and, therefore, to its size.

Step 6 can be interchanged with the following method. Given the optical flow of the highest resolution ($k=0$), the depth map in the previous frame $D_s(t-1)$ can be translated image point-by-point in $D'_s$. Mathematically expressed, this would be $D'_s(i,j, t-1) = D'_s(O_{X,0}(i,j), O_{Y,0}(i,j), t-1)$, where $O_{X,0}(i,j)$ and $O_{Y,0}(i,j)$ are the result of step 2 in the current frame. Once the translated depth map $D'_s$ is obtained, the integration with the current depth map is equivalent to that described above, namely $D = \alpha * D'_s(t-1) + (1-\alpha) * D_s(t)$.

**Claims**

1. Method for generating depth maps for converting moving 2D images to 3D, where the moving 2D image is made up of a series of still images sequenced with a frequency to give a feeling of motion, and where the still image of a specific moment is referred to as current frame (K), the still image prior to the current frame is referred to as previous frame (K-1) and so on; where the generated depth maps are used for an action selected from directly viewing 2D images in a 3D system, transmitting video files incorporating information relating to their three-dimensional viewing and a combination of both; **characterized in that** said method comprises the following six steps:

   - a first step (1) in which a pyramid of scaled versions of the current frame (1B) and a pyramid of scaled versions of the previous frame (1A) are generated; where the pyramid of scaled versions of the current frame comprises hierarchical versions of the current frame and the pyramid of scaled versions of the previous frame comprises hierarchical versions of the previous frame; where the hierarchical versions are carried out by means of controlled variations of at least one of the parameters of the corresponding still image;
   - a second step (2) in which the optical flow between the pyramid of scaled versions of the current frame (1B) and the pyramid of scaled versions of the previous frame (1A) is calculated; where said calculation of the optical flow is carried out by means of a standard algorithm for matching and comparing blocks of pixels between two images; obtaining partial depth maps with different degrees of resolution;

- a third step (3) in which the image-point-oriented depth map is calculated, which is carried out by means of adding said partial depth maps together after they are resized and weightings are assigned to give a degree of relevance to each of said partial maps; where the weightings assigned to each depth map are based on the value of its degree of resolution;

- a fourth step (4) in which segments of the current frame (K) are generated, in which said current frame (K) is split into segments depending on at least one relative feature relating to the image of the various areas of the current frame, said relative feature being color consistency;

- a fifth step (5) in which the segment-oriented depth map of the current frame (5A) is calculated, in which a single depth value is assigned to each segment established in the fourth step (4), said depth value being the mean value of the pixels comprised in each segment of the image-point-oriented depth map calculated in the third step (3); obtaining a segment-oriented depth map of the current frame (5B); and,

- a sixth step (6) in which segment-oriented depth maps (5B, 5B') relating to the current frame (5B) and to the previous frame (5B') are integrated; the segment-oriented depth map of the previous frame being the result of applying steps 1 to 5 of the method to the previous frame (K-1) and to a frame prior to the previous frame (K-2); said integration consisting of a weighted sum of the segment-oriented depth map of the current frame (5B) with the segment-oriented depth map of the previous frame (5B'); obtaining a final depth map (6B) for the current frame.

2. Method for generating depth maps for converting moving 2D images to 3D according to claim 1, **characterized in that** the pyramid of scaled versions of an image (1A, 1B) is generated in the first step (1) by downscaling the starting frame (K, K-1) several fold in the version of gray-level intensities of the image, such that in each level of the pyramid, the scaled versions have half the width and half the height in pixels with respect to the previous level, and such that every time an image is scaled, it is first filtered with a fixed-size Gaussian filter, and it is then downsampled by rejecting the even rows and columns, performing this filtering to improve stability and generating the pyramid of scaled versions on the previous video frame (1A) and current video frame (1B); however, to accelerate the process, the pyramid corresponding to the current frame (1B) is saved so that when the first step (1) of the method is applied to a frame following the current frame, the pyramid corresponding to the frame which is prior to said following frame is already available.

3. Method for generating depth maps for converting moving 2D images to 3D according to claim 1 or 2, **characterized in that** the optical flow is calculated in the second step (2) by matching the blocks of pixels between two images, said blocks having a fixed size and such that a block is formed by first intensity values of the pixels of a first image corresponding to a level of the pyramid generated in the first step (1) for one of the frames (K, K-1), establishing the best match by means of the block of second intensity values of the pixels of a second image corresponding to a level of the pyramid generated in the first step (1) for the other one of the frames (K-1, K) and such that it has second intensity values closer to the aforementioned first values; the optical flow being the distance on the X and Y axes in pixels from the coordinates of the block (i, j) in the first image to the best matched coordinates in the second image, such that two maps result, one for the X axis and the other for the Y axis.

4. Method for generating depth maps for converting moving 2D images to 3D according to any one of the preceding claims, **characterized in that** all the partial depth maps are resized in the third step (3) to the dimension of the starting frame (K, K-1) in the method, and all the partial depth maps are added together to generate the image-point-oriented depth map, assigning a different weight to each of them, and such that the lower the degree of resolution of a partial depth map, the greater the weight assigned to it.

5. Method for generating depth maps for converting moving 2D images to 3D according to any one of the preceding claims, **characterized in that** the integration of the depth maps of the sixth step (6) is carried out by means of the following expression:

$$D = \alpha \cdot D_s(t-1) + (1-\alpha) \cdot D_s(t);$$

where $D_s(t)$ indicates the segment-oriented depth map relating to a current frame; $D_s(t-1)$ indicates the segment-oriented depth map relating to a previous frame; D is the resulting integrated map and $\alpha$ is an integration ratio.

6. Method for generating depth maps for converting moving 2D images to 3D according to claim 5, **characterized in that** said method is optimized with:

- original images (K, K-1, K-2) with a size of 960 x 540 pixels;

- five levels in the pyramids of scaled versions of the previous frame (1A) and current frame (1B) of the first step (1);
- a block size of 20 x 20 pixels for the calculation of the optical flow of the second step (2); and,
- an integration ratio $\alpha = 0.8$ in the sixth step (6).

7. Method for generating depth maps for converting moving 2D images to 3D according to any one of the preceding claims, **characterized in that** the optical flow calculated for the input of the third step comprises the calculation of the optical flow between the previous frame (K-1) and the current frame (K) by means of blocks of pixels of a variable size; calculating this optical flow n times for one and the same still image or frame (K, K-1) filtered with a Gaussian filter of a different size each of those n times; n being a natural number coinciding with the number of levels of each of the pyramids of the first step of the method; said variable size of the blocks of pixels being directly proportional to the variance of the Gaussian filter and inversely proportional to the value of n.

8. Method for generating depth maps for converting moving 2D images to 3D according to any one of claims 1 to 4, 6 or 7, **characterized in that** the integration of the depth maps of the sixth step (6) is carried out by means of the following expression:

$$D = \alpha * D'_S(t-1) + (1-\alpha) * D_S(t);$$

where $D_S(t)$ indicates the segment-oriented depth map relating to a current frame; D is the resulting integrated map; $\alpha$ is an integration ratio; and $D'_S(t-1)$ is a translated depth map that is obtained by means of the point-by-point image translation of the segment-oriented depth map relating to a previous frame $D_S(t-1)$ to a complementary depth map $D'_S$ which is a segment-oriented depth map obtained from the optical flows obtained in the second step, where only the partial depth maps having a higher degree of resolution and relating to a current frame are considered.

FIG. 1

**FIG. 2**

EP 2 595 116 A1

# INTERNATIONAL SEARCH REPORT

| International application No. |
| --- |
| PCT/ES2010/070308 |

A. CLASSIFICATION OF SUBJECT MATTER

*G06T13/00* (2006.01)
*G06T7/00* (2006.01)
According to International Patent Classification (IPC) or to both national classification and IPC

B. FIELDS SEARCHED

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

EPODOC, INVENES, WPI

C. DOCUMENTS CONSIDERED TO BE RELEVANT

| Category* | Citation of document, with indication, where appropriate, of the relevant passages | Relevant to claim No. |
| --- | --- | --- |
| A | US 2010073364 A1 (JUNG YONG JU ET AL.) 25/03/2010 | 1 |
| A | US 2009268985 A1 (WONG EARL QUONG ET AL.) 29/10/2009 | 1 |
| A | CN 101556696 A (UNIV ZHEJIANG ) 14/10/2009 | 1 |
| A | WO 03005727 A1 (KONINKL PHILIPS ELECTRONICS NV ) 16/01/2003 | 1 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance. | | |
| "E" | earlier document but published on or after the international filing date | | |
| "L" | document which may throw doubts on priority claim(s) or which is cited to establish the publication date of another citation or other special reason (as specified) | "X" | document of particular relevance; the claimed invention cannot be considered novel or cannot be considered to involve an inventive step when the document is taken alone |
| "O" | document referring to an oral disclosure use, exhibition, or other means. | "Y" | document of particular relevance; the claimed invention cannot be considered to involve an inventive step when the document is combined with one or more other documents , such combination being obvious to a person skilled in the art |
| "P" | document published prior to the international filing date but later than the priority date claimed | | |
| | | "&" | document member of the same patent family |

| Date of the actual completion of the international search | Date of mailing of the international search report |
| --- | --- |
| 16/11/2010 | **(26-11-2010)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | M. González Vasserot |
| | Telephone No. 91 3493087 |

Form PCT/ISA/210 (second sheet) (July 2009)

## INTERNATIONAL SEARCH REPORT

Information on patent family members

International application No.

PCT/ES2010/070308

| Patent document cited in the search report | Publication date | Patent family member(s) | Publication date |
|---|---|---|---|
| US2010073364 A | 25.03.2010 | EP2169619 A<br>EP20090171211<br>KR20100034789 A<br>JP2010079899 A | 31.03.2010<br>24.09.2009<br>02.04.2010<br>08.04.2010 |
| US2009268985 A | 29.10.2009 | NONE | |
| CN101556696 A | 14.10.2009 | NONE | |
| WO03005727 A | 16.01.2003 | US2003007667 A<br>US7039110 B<br>EP1407613 A<br>EP20020733174<br>CN1522542 A<br>CN1284373C C<br>JP2004534336T T | 09.01.2003<br>02.05.2006<br>14.04.2004<br>21.06.2002<br>18.08.2004<br>08.11.2006<br>11.11.2004 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7039110 B2

### Non-patent literature cited in the description

- **A. BOURGE ; J. GOBERT ; F. BRULS.** MPEG-C Part 3: Enabling the Introduction of Video Plus Depth Contents. *Proc. of the IEEE Workshop on Content generation and coding for 3D-television,* 2006
- **L. ALVAREZ ; R. DERICHE ; J. SÁNCHEZ ; J. WEICKERT.** Dense Disparity Map Estimation Respecting Image Discontinuities: A PDE and Scale-Space Based Approach. *Tech. Report, INRIA Sophia-Antipolis, France,* 2000
- Real-time 2D to 3D video conversion. **I. IDESES ; L.P. YAROSLAVSKY ; B. FISHBAIN.** Journal of Real-time Image Processing. Springer, 2007, vol. 2, 3-9
- **LI, P ; FARIN, D. ; KLEIN GUNNEWIEK, R. ; DE WITH, P.** On Creating Depth Maps from Monoscopic Video using Structure from Motion. Proc. of the 27th Symp. *Information Theory in the BENELUX (WIC2006,* 08 June 2006, vol. 1
- **BERTHOLD K.P. HORN ; BRIAN G. SCHUNCK.** Determining Optical Flow. *Artificial Intelligence,* 1981, vol. 17, 185-203